# EUROPÄISCHE PATENTANMELDUNG

(11) **EP 3 915 856 A1**
(43) Veröffentlichungstag der Anmeldung: **01.12.2021**
(21) Anmeldenummer: 21176844.5
(22) Anmeldetag: 31.05.2021
(51) Int. Cl.: B62B 3/00, B62B 5/00, B62B 5/06

(54) **HAPTISCHES BEDIENGERÄT UND ANTRIEBSVORRICHTUNG**

(30) Priorität: 29.05.2020 DE 202020103130 U; 27.07.2020 DE 202020104319 U
(71) Anmelder: Locomotec GmbH, 86199 Augsburg (DE)
(72) Erfinder: Shahsavari, Armin, 86199 Augsburg (DE)
(74) Vertreter: ERNICKE Patent- und Rechtsanwälte PartmbB

(57) **Zusammenfassung**

Die vorliegende Offenbarung betrifft ein Bediengerät zur Erzeugung eines Bewegungs-Steuersignals (SM) für ein in der Ebene omnidirektional fahrbares Objekt (100), das mit einer und bevorzugt mehreren omnidirektionalen Antriebseinheiten (201) zeitweise oder dauerhaft verbunden ist. Das Bediengerät (1) umfasst ein Griffteil (2), zwei Griffteil-Sensorabschnitte (5, 6) und zwei nachgiebige Lagerelemente (7, 8). An oder in den Lagerelementen (7, 8) sind Lager-Sensorabschnitte (13, 14) angeordnet. Das Griffteil (2) ist durch die Lagerelemente (7, 8) derart gegenüber einer Halterung (10) festlegbar, dass die zwei Lagerelemente (7, 8) das Griffteil (2) in eine Referenzposition (P*) drängen und bei Aufbringung externer Kräfte (F) am Griffteil (2) eine Auslenkung (dP) zulassen. Die Auslenkung (dP) des Griffteils (2) wird an den zwei Lagerelementen (7, 8) separat erfasst. Jedes der zwei Lagerelemente (7, 8) lässt eine lokale Auslenkung (dU, dV, dW) des Griffteils (2) in mehreren Freiheitsgraden zu und weist eine bekannte mehrachsige Steifigkeit (K, K1, K2, K3) auf. Die Auslenkungssensoren (15, 16) erfassen jeweils eine mehrachsige lokale Auslenkung (dU, dW). Die Offenbarung betrifft weiterhin eine Antriebsvorrichtung (300).

Die zur Veröffentlichung mit der Zusammenfassung vorgesehene Figur ist Figur 1.

## Beschreibung

Die vorliegende Offenbarung betrifft eine Steuertechnik für kollaborative Bewegungseinrichtungen und insbesondere ein Bediengerät zur Erzeugung eines Bewegungs-Steuersignals für ein in der Ebene omnidirektional fahrbares Objekt, sowie eine Antriebsvorrichtung gemäß dem Oberbegriff der eigenständigen Ansprüche.

Unter einer omnidirektionalen Bewegung in der Ebene ist zu verstehen, dass das fahrbare Objekt JEDE der folgenden Beweglichkeiten aufweist:
- Translation in einer ersten horizontalen Richtung (bspw. Geradeausfahrt);
- Translation in einer zweiten horizontalen Richtung, die orthogonal zur ersten horizontalen Richtung ist (bspw. Seitwärtsfahrt);
- Translation in weiterein horizontalen Richtungen, insbesondere allen horizontalen Richtungen, die zwischen der ersten und zweiten horizontalen Richtung liegen (Schrägfahrten);
- Rotation um eine senkrechte Achse (Drehung)

Eine tatsächliche omnidirektionale Fahrbewegung in der Ebene kann aus einer beliebigen Kombination der vorgenannten Beweglichkeiten zusammengesetzt sein. Mit anderen Worten ist eine omnidirektionale Bewegung in der Ebene durch eine Bewegung mit drei Freiheitsgraden gekennzeichnet.

Aus JP 3772653 B2 und JP 2002 002 488 A ist ein Betätigungsgriff bekannt, der an einer Seitenfläche eines zu steuernden Essenausgabewagen angeordnet ist. Der Essenausgabewagen weist als Antrieb einen Satz von vier sogenannten "universal drives" auf. Der Betätigungsgriff ist über eine erste linke Blattfeder und eine erste rechte Blattfeder an einem Basisteil befestigt. Das Basisteil ist wiederum über eine zweite linke Blattfeder und eine zweite rechte Blattfeder am Essensausgabewagen befestigt. Jede der Blattfedern gestattet eine 1-dimensionale Auslenkung des Betätigungsgriffs. Die Bewegung der ersten linken Blattfeder wird über einen ersten 1-dimensionalen Wegsensor erfasst. Die Bewegung der ersten rechten Blattfeder wird über einen weiteren 1-dimensionalen Wegsensor erfasst. Die Bewegung der Basis wird über nochmals einen anderen 1-dimensionalen Wegsensor erfasst. Die Signale der Wegsensoren werden direkt in eine Steueranweisung in Form einer Vorgabe-Geschwindigkeit oder einer Vorgabe-Kraft für die Radantriebe umgesetzt.

JP 2005 280 385 A offenbart die Verwendung eines entsprechenden Betätigungsgriffs für die Steuerung eines Fahrzeugs, das mit zwei Freiheitsgraden in der Ebene bewegbar ist. Das Fahrzeug weist als Beweglichkeiten eine Translation in einer ersten horizontalen Richtung und eine Rotation um die Hochachse auf. Das Fahrzeug weist als Antrieb zwei angetriebene Räder mit gemeinsamer feststehender Achse auf, wobei diese Räder separat mit unterschiedlichen Drehgeschwindigkeiten antreibbar sind.

In JP 2007 290 416 A ist ein ähnlicher Betätigungsgriff mit 1-dimensional beweglichen Federn offenbart, bei dem anstelle von Wegsensoren EIN/AUS Schalter verwendet sind.

Aus DE 10 2008 202 582 A1, US 2006/0 048 980 A1, US 2015/0 053 042 A1, US 2015/0 060 175 A1 sind weitere griff-förmige Betätigungselemente bekannt, die über 1-dimensional bewegliche Elemente gelagert sind und zur Steuerung von Fahrzeugen eingesetzt werden, die eine Beweglichkeit mit zwei Freiheitsgraden aufweisen.

Die bisher bekannten Steuertechniken sind nicht optimal ausgebildet. Es ist Aufgabe der vorliegenden Erfindung, eine verbessere Steuertechnik aufzuzeigen, die insbesondere für die Bewegung einer Vielzahl von Objekten universell einsetzbar, anpassbar und modular konfigurierbar ist. Die offenbarte Steuertechnik ist insbesondere dazu geeignet, für die Steuerung von kollaborativen Roboterplattformen eingesetzt zu werden. Das sind Roboterplattformen, die eine teilautonome oder vollautonome Bewegung ausführen können und sich in demselben Arbeitsbereich bewegen, der auch von Menschen genutzt wird, ohne dass es einer zeitlichen oder räumlichen Trennung bedarf.

Die Erfindung löst diese Aufgabe durch die Gegenstände der eigenständigen Ansprüche.

Die Steuertechnik gemäß der vorliegenden Offenbarung gestattet eine kraftgeregelte Bewegung von einer oder mehreren Bewegungseinrichtungen infolge einer Steuerkraft. Die Bewegungseinrichtungen sind mit dem zu bewegenden Objekt verbunden. Die Steuerkraft wird sensorisch erfasst, insbesondere durch das offenbarte Bediengerät. Die Bewegung des Objektes wird so vorgesehen, dass die für einen Benutzer haptisch wahrnehmbaren Ist-Reaktionskräfte während einer Bewegung des Objekts im Vergleich zu den hypothetischen Reaktionskräften, die für die Bewegung des Objekts ohne einen unterstützenden geregelten Antrieb auftreten würden, in den Richtungsbezügen übereinstimmen und gleichzeitig in der Höhe vermindert sind. Die Ist-Reaktionskräfte sind dabei bevorzugt ein proportionales Abbild der hypothetischen Reaktionskräfte. Damit fühlt sich der Bewegungsvorgang für den Benutzer insbesondere so an, als sei die Masse und/oder Trägheit des Objekts reduziert.

Das zu bewegende Objekt kann dabei von beliebiger Art und Größe sein. Es kann sich beispielsweise um einen Transportcontainer für den Frachtverkehr handeln, an dem einerseits eine oder mehrere Bewegungseinrichtungen gemäß der Offenbarung und andererseits ein oder mehrere Bediengeräte gemäß der Offenbarung angeordnet sind. Durch die Steuerkräfte, die an den Bediengeräten von einem oder mehreren Benutzern aufbringbar sind, kann eine durch Kraftregelung unterstützte Bewegung ausgeführt werden, welche die gefühlte Masse des Objekts auf ein beliebiges Niveau reduziert. Selbst ein mehrere Tonnen schweres Objekt kann sich so durch einfaches Angreifen und Drücken oder Ziehen an einem Bediengerät bewegen lassen und zwar so, als sei es nur wenige Kilo schwer.

Die mindestens eine Bewegungseinrichtung und das mindestens eine Bediengerät können dabei unabhängig von dem zu bewegenden Objekt sein bzw. wechselweise mit unterschiedlichen zu bewegenden Objekten kombiniert werden.

Eine Kommando-Steuerung des Bediengeräts berechnet ein Bewegungs-Steuersignal (SM) für eine omnidirektionale Soll-Bewegung der fahrbaren Objektes. Das Bewegungs-Steuersignal (SM) definiert, wie sich das Objekt (nicht die Antriebe) bewegen soll. Die Soll-Bewegung ist bevorzugt auf einen bekannten Bezugspunkt an dem fahrbaren Objekt bezogen. Die Soll-Bewegung kann eine Fahrbewegung in der Ebene definieren, die aus einer beliebigen Kombination der folgenden Beweglichkeiten zusammengesetzt ist:
- Translation in einer ersten horizontalen Richtung (bspw. Geradeausfahrt);
- Translation in einer zweiten horizontalen Richtung, die orthogonal zur ersten horizontalen Richtung ist (bspw. Seitwärtsfahrt);
- Translation in weiterein horizontalen Richtungen, insbesondere allen horizontalen Richtungen, die zwischen der ersten und zweiten horizontalen Richtung liegen (Schrägfahrten);
- Rotation um eine senkrechte Achse (Drehung)

Die Soll-Bewegung des fahrbaren Objektes ist ein Kommando-Parameter, der von einer Bewegungs-Regelung in einem separaten Schritt in Steuerbefehle für einen oder mehrere Antriebe umsetzbar ist.

Die omnidirektionale Soll-Bewegung kann eine Rotationsbewegung um eine senkrechte Achse und eine Translationsbewegung in jeder beliebigen Richtung in der Horizontalebene umfassen.

Die Soll-Bewegung kann (etwaig ausschließlich) eine Kinetik-Definition für das fahrbare Objekt umfassen, d.h. eine Soll-Richtung und etwaig eine Soll-Geschwindigkeit für das fahrbare Objekt definieren, bevorzugt in Relation zu einem bekannten Bezugspunkt des fahrbaren Objektes.

Durch eine Bewegungs-Regelung können aus dieser Soll-Bewegung entsprechend der konkret vorhandenen Antriebstechnik ein oder mehrere Soll-Antriebsgeschwindigkeiten und/oder ein oder mehrere Soll-Antriebskräfte berechnet werden. Mit anderen Worten kann durch die Bewegungs-Regelung aus der Kinetik-Definition für das fahrbare Objekt eine Kinetik-Definition und eine Dynamik-Definition für die Antriebe berechnet werden, und zwar bevorzugt in einem separaten Schritt.

Durch die logische Trennung zwischen der Berechnung der Soll-Bewegung für das fahrbare Objekt und der Bewegungs-Regelung, wobei die Berechnung der Soll-Bewegung über die Kommando-Steuerung des Bediengeräts erfolgt, wird erreicht, dass dasselbe Bediengerät modular mit verschiedenen Antriebsvorrichtungen und fahrbaren Objekten kombiniert werden kann.

Die vorliegende Offenbarung umfasst mehrere Aspekte, die jeweils für sich allein oder in beliebiger Kombination nutzbar sind und einen Beitrag zur Lösung der Aufgabe leisten.

Ein erster Aspekt betrifft ein Bediengerät zur Erzeugung eines Bewegungs-Steuersignals für ein in der Ebene omnidirektional fahrbares Objekt. Das Bediengerät umfasst ein Griffteil mit mindestens zwei Greifbereichen. Das Griffteil kann von einem Benutzer mit einer ersten Hand an einem ersten Greifbereich und mit einer zweiten Hand an einem zweiten Greifbereich (4) gegriffen werde.

Das Bediengerät umfasst ferner zwei Griffteil-Sensorabschnitte, wobei der erste Griffteil-Sensorabschnitt an oder neben dem ersten Greifbereich angeordnet ist und der zweite Griffteil-Sensorabschnitt an oder neben dem zweiten Greifbereich angeordnet ist. An den Greifbereichen sind durch den Benutzer Kräfte aufbringbar, um eine Steuervorgabe für die Bewegung des Objekts zu machen. Die vom Benutzer aufgebrachten Kräfte sind bezogen auf das Bediengerät externe Kräfte bzw. Steuerkräfte.

Das Bediengerät umfasst weiterhin mindestes und bevorzugt genau zwei nachgiebige Lagerelemente, durch die das Griffteil derart gegenüber einer Halterung festlegbar ist, dass die Lagerelemente das Griffteil in eine Referenzposition drängen und bei Aufbringung der externen Kräfte am Griffteil eine Auslenkung des Griffteils gegenüber der Referenzposition zulassen. Die Lagerelemente können beispielsweise elastische Körper sein oder elastische Strukturen aufweisen.

An oder in den Lagerelementen sind Lager-Sensorabschnitte angeordnet. Ein erster Lager-Sensorabschnitt korrespondiert mit dem ersten Griffteil-Sensorabschnitt und ein zweiter Lager-Sensorabschnitt korrespondiert mit dem zweiten Griffteil-Sensorabschnitt. An jedem Paar von korrespondierenden Sensorabschnitten ist mindestens ein Auslenkungssensor derart angeordnet, dass die Auslenkung des Griffteils erfassbar ist. Die Auslenkung kann insbesondere in Bezug auf eine Referenzposition erfasst werden, die (im unbelasteten Zustand) über eine Kontur der Lagerelemente festgelegt ist. Diese Kontur kann beispielsweise die Berührfläche zwischen einem Lagerelement und einer Halterung sein. Die Halterung kann ein Bestandteil des Bediengeräts oder eine extern vorgesehene Halterung sein.

Die Auslenkungssensoren erfassen jeweils eine mehrachsige lokale Auslenkung des Griffteils.

Die Auslenkung des Griffteils kann an jedem Lagerelement als (anteilige) lokale Auslenkung vorhanden und erfassbar sein. Das Griffteil ist bevorzugt ein starrer Körper, sodass die lokalen Auslenkungen an den Lagerelementen gemäß den geometrischen Bezügen mit der Gesamtauslenkung des Griffteils übereinstimmen.

Ein Auslenkungssensor kann an dem Griffteil-Sensorabschnitt angeordnet sein. Der Auslenkungssensor kann eine mehrachsige Auslenkung gegenüber einem Mess-Objekt erfassen. Das Mess-Objekt kann an dem Lager-Sensorabschnitt angeordnet sein. Der Auslenkungssensor ist dabei insbesondere fest mit dem Griffteil verbunden, während das Mess-Objekt eine feste Anordnung gegenüber der Referenzkontur hat und insbesondere an der Halterung oder an der Außenseite eines Lagerelements angeordnet ist. Auf diese Weise kann die Sensorik an oder in dem Griffteil des Bediengeräts integriert sein, sodass bei einer Entfernung des Bediengeräts von dem fahrbaren Objekt keine separate Demontage / Änderung der Sensorik erforderlich ist.

Alternativ kann die Anordnung von Auslenkungssensor und Mess-Objekt umgekehrt sein.

Ein Auslenkungssensor und ein Mess-Objekt können über eine beliebige Messungsart eine Auslenkung direkt oder indirekt erfassen. Beispielswiese kann eine magnetische, elektromagnetische, induktive oder kapazitive Messungsart vorgesehen sein. Ein Mess-Objekt kann beispielsweise ein Elektromagnet sein, dessen Feld von einem Auslenkungssensor in Form eines Magnetsensors erfasst wird.

Bei der Bewegung des Griffteils aus der Referenzposition in eine ausgelenkte Position können durch die Lagerelemente Rückstellkräfte erzeugt werden, die das Griffteil in Richtung der Referenzposition zurückdrängen. Diese Rückstellkräfte können mehrere Richtungskomponenten aufweisen, insbesondere mehrere translatorische Kraftanteile und rotatorische Kraftanteile (Momente). Sie sind für den Benutzer als Reaktionskräfte fühlbar. Der Verlauf der Rückstellkräfte in Bezug auf die Auslenkung ist bevorzugt bekannt und etwaig einstellbar oder steuerbar, insbesondere durch Vorgabe, Einstellung oder Steuerung der Steifigkeit / Resilienz. Besonders bevorzugt können die Steifigkeit / Resilienz des mindestens einen Lagerelementes für eine oder mehrere Freiheitsgrade separat bekannt und etwaig einstellbar oder steuerbar sein.

Die Festlegung des Griffteils über zwei nachgiebige Lagerelemente, die eine mehrachsige Beweglichkeit zulassen und eine für mehrere Achsen / Richtungsanteile bekannte Steifigkeit aufweisen, hat verschiedene Vorteile. Zunächst wird es vermieden, dass mehrere elastische Elemente zwischen der Halterung und dem Griffteil in Serie geschaltet werden, wodurch ein sogenannte Mehrmassen-Schwinger erzeugt würde. Mehrmassen-Schwinger weisen ein komplexes Schwingungsverhalten auf und sind anfällig für mehrfache Resonanzen, die bei den bisher bekannten Steuertechniken beispielsweise durch eine Bewegung der Antriebe hervorgerufen werden. Infolgedessen kann das Bediengerät gemäß der vorliegenden Offenbarung leichter mit verschiedenen fahrbaren Objekten und/oder verschiedenartigen Antrieben kombiniert werden, ohne eine Resonanz-Verträglichkeit optimieren zu müssen. Ferner werden Fehl-Eingaben oder Fehl-Erfassungen von externen Kräften, auf Basis einer Auslenkung des Griffteils, die durch Resonanz-Anregung bedingt ist, wirksam vermieden.

Andererseits werden durch die Lagerung des Griffteils keine unnötigen Spannungskräfte verursacht, die zu einem Verklemmen oder Verwinden des Griffteils führen könnten. Bei bisher bekannten Betätigungsgriffen ist eine lokale Beweglichkeit in den Lagerpunkten auf mehrere 1-dimesionale Teilbewegungen beschränkt, die miteinander verkettet sind, während das Griffteil insgesamt eine mehrdimensionale Beweglichkeit haben soll. Hieraus folgt eine statische Überbestimmung, sodass bei der Bewegung des Griffteils Spannungskräfte im Lager erzeugt werden. Diese Spannungskräfte überlagern sich bei den vorbekannten Betätigungsgriffen als sogenannte "bias forces" mit den extern aufgebrachten Kräften, sodass eine exakte Differenzierung zwischen den externen Kräften und den aus der Lagerung bedingten Spannungskräften nicht eindeutig möglich ist und entsprechende Fehlerfassungen auftreten können.

Durch die mehrachsige Beweglichkeit und die bekannte mehrachsige Steifigkeit / Resilienz der Lagerelemente gemäß der vorliegenden Offenbarung werden solche Fehlerfassungen vermieden. Das Bediengerät weist eine Kommando-Steuerung auf, die mit den Auslenkungssensoren verbunden ist und aus der erfassten Auslenkung das Bewegungs-Steuersignal für die Soll-Bewegung des fahrbaren Objektes berechnet.

Bevorzugt wird die (lokale und/oder anteilige) Auslenkung an den zwei Lagerelementen separat erfasst. Auf Basis der (ein- oder mehrachsigen) Steifigkeit / Resilienz der Lagerelemente kann aus der Auslenkung die externe Kraft berechnet werden, die von dem Benutzer auf das Griffteil ausgewirkt wird. Diese externe Kraft kann einen oder mehrere Richtungsanteile sowie Momentenanteile umfassen.

Die Antriebsvorrichtung gemäß der vorliegenden Offenbarung ist zur Bereitstellung eines gesteuerten Fahrantriebs für ein Objekt ausgebildet. Sie ist signaltechnisch mit mindestens einem Bediengerät gemäß der vorliegenden Offenbarung verbindbar oder verbunden. Bevorzugt umfasst die Antriebsvorrichtung mindestens ein solches Bediengerät.

Die Antriebsvorrichtung umfasst weiterhin mindestens eine Bewegungseinrichtung, die wiederum mindestens eine und bevorzugt mehrere omnidirektionale Antriebseinheiten umfasst. Die omnidirektionalen Antriebseinheiten können eine beliebige Ausbildung haben. Mit anderen Worten ist die Antriebsvorrichtung als omnidirektionale Antriebsvorrichtung ausgebildet.

Die Bewegungseinrichtungen und insbesondere die jeweiligen omnidirektionalen Antriebseinheiten werden gemeinsam über eine Bewegungs-Regeleinrichtung gesteuert. Die Steuerung erfolgt in Reaktion auf mindestens ein Bewegungs-Steuersignal, das von dem Bediengerät übermittelt werden. Es können dabei mehrere Bewegungs-Steuersignale von mehreren Bediengeräten gleichzeitig in eine gemeinsame und synchronisierte Fahrbewegung von zwei oder mehr Bewegungseinrichtungen umgesetzt werden.

Besonders bevorzugt können die ein- oder mehreren Bewegungseinrichtungen als kollaborative Roboterplattformen ausgebildet sein oder eine solche umfassen. Ein kollaborativer Roboter ist ein Roboter, der mit Menschen gemeinsam arbeitet und im Arbeitsprozess nicht durch Schutzeinrichtungen von diesen getrennt ist. Eine Roboterplattform ist eine bewegliche Plattform, die selbst eine robotische Manipulation mit externen Objekten ausführen kann und/oder an der ein zusätzlicher Roboter angeordnet ist, um eine robotische Manipulation auszuführen.

Eine kollaborative Roboterplattform ist entsprechend eine Roboterplattform, die mit Menschen gemeinsam arbeitet und im Arbeitsprozess nicht durch Schutzeinrichtungen von diesen getrennt ist und die weiterhin selbst eine robotische Manipulation mit externen Objekten ausführen kann und/oder an der ein zusätzlicher Roboter angeordnet ist, um eine robotische Manipulation auszuführen.

Gemäß einem weiteren Aspekt der vorliegenden Offenbarung kann eine Bewegungs-Regelung vorgesehen sein, die eine Kraftregelung für die Bewegung des Objektes in Abhängigkeit von erfassten Steuerkräften ausführt. Die Steuerkräfte werden bevorzugt über ein Bediengerät gemäß der vorliegenden Offenbarung erfasst. Die Bewegungs-Regelung wird bevorzugt durch eine Bewegungs-Regeleinrichtung der offenbarten Antriebsvorrichtung ausgeführt.

Das mindestens eine Bediengerät sendet bevorzugt ein Bewegungs-Steuersignal an die Bewegungs-Regeleinrichtung und die Bewegungs-Regeleinrichtung steuert die mindestens eine Bewegungseinrichtung, insbesondere die mindestens eine omnidirektionale Antriebseinheit, derart, dass die Ist-Bewegung des Objekts der Soll-Bewegung gemäß dem Bewegungs-Steuersignal angenähert wird oder nachfolgt. Dabei ist eine Kraftregelung für die Bewegung des Objekts vorgesehen, insbesondere eine Admittanz-Regelung und/oder Impedanz-Regelung.

Die Kraftregelung ist derart ausgebildet, dass die Bewegung des Objektes so geregelt wird, dass einerseits die Ist-Bewegung des Objektes hinsichtlich der Richtungsvorgaben (Kinematik) der Soll-Bewegung nachfolgt, UND andererseits die Ist-Bewegung des Objektes in Bezug auf die Kraftvorgaben (Dynamik), die durch die externen Kräfte / Steuerkräfte erfasst werden, angepasst und insbesondere verstärkt werden.

Gemäß einer bevorzugten Ausführung kann die Antriebsvorrichtung eine Umfelderfassung aufweisen. Die Umfelderfassung kann beliebig ausgebildet sein. Sie kann bevorzugt Bewegungseinschränkungen durch Hindernisse oder Sperrbereiche im Umfeld des Objekts und/oder der mindestens einen Bewegungseinrichtung erfassen. Eine Bewegungseinschränkung kann in der Bewegungs-Regelung als eine Sperrzone erfasst und berücksichtigt werden.

Die Umfelderfassung kann beispielsweise Abstandssensoren und/oder bildgebende Umgebungssensoren aufweisen und/oder Informationen über Bewegungseinschränkungen von einem externen Überwachungssystem empfangen.

Die Antriebsvorrichtung / Bewegungs-Regelung und/oder die Kraftregelung kann bevorzugt zwei oder mehr der folgenden Autonomielevel vorsehen oder unterstützen:
Level 01: Unbeschränkte Kraft- oder Momenten-Verstärkung durch Impedanz-Regelung und/oder Admittanz-Regelung;
Level 02: Kraft- oder Momenten-Verstärkung mit Einschränkung der steuerbaren Freiheitsgrade der Bewegung, insbesondere Festlegung einer Bewegung durch reine Translation in einer oder zwei Richtungen und/oder Festlegung einer Bewegung durch reine Rotation und/oder Festlegung einer Bewegung mit einem definierten Zentrum für die Rotation oder einen Rotationsanteil der Bewegung;
Level 03: Kraft- oder Momenten-Verstärkung mit einer Zonenvermeidungsregelung, die eine zu starke Annäherung an oder das Einfahren in solche Umgebungszonen vermeidet, in denen eine Bewegungseinschränkung erfasst wurde;
Level 04: Zumindest zeitweise Trajektoriensteuerung, wobei die Regelung der Ist-Bewegung nach einer vorgegebenen oder von der Antriebsvorrichtung autonom festgelegten Trajektorie erfolgt und der Benutzer nur die Geschwindigkeit oder das quantitative Ausmaß der Bewegung vorgibt;
Level 05: Zumindest zeitweise vollständig autonome Bewegungsregelung für mindestens eine Bewegungseinrichtung und/oder das zu bewegende Objekt.

Die Antriebsvorrichtung kann eine oder mehrere kollaborative Roboterplattform umfassen. Eine bevorzugte Ausführung sieht vor, dass die Antriebsvorrichtung mindestens zwei kollaborative Roboterplattformen aufweist, die dazu ausgebildet sind, zumindest zeitweise mit dem zu bewegenden Objekt, beispielsweise einem Krankenhausbett, mechanisch gekoppelt zu werden. Die Bewegungs-Regelung der mehreren Roboterplattformen ist bevorzugt derart synchronisiert, dass sie gemeinsam mit dem Objekt eine Gesamt-Bewegung ausführen, die mit der Soll-Bewegung für das Objekt korrespondiert. Für die Bewegungssynchronisation können Partialbewegungen der Roboterplattformen gemäß der Momentanpol-Lehre aus der Soll-Bewegung für das Objekt ermittelt werden.

Auch für andere Anwendungen kann eine Bewegungssynchronisation vorgesehen sein. Dabei werden bevorzugt Partialbewegungen für einen oder mehrere omnidirektionale Antriebe aus der Soll-Bewegung für das Objekt ermittelt.

Geometrische Beziehungen zwischen der relativen Anordnung von Bewegungseinrichtungen und/oder omnidirektionalen Antreibe und/oder einem oder mehreren Bediengeräten an dem zu fahrenden Objekt können auf beliebige Weise ermittelt sein. Sie können durch manuelle Eingabe oder teilautomatische Erfassung vorgegeben sein.

Alternativ und bevorzugt kann ein Lernvorgang vorgesehen sein, bei dem eine oder mehrere Bewegungseinrichtungen und/oder omnidirektionale Antriebe selektiv in Mikrobewegungen versetzt oder blockiert werden und sich ergebende Reaktionskräfte oder Reaktionsbewegungen an den anderen mit dem Objekt verbundenen Geräten ermittelt werden. Aus dem Vergleich der gesteuerten Mikrobewegungen mit den Reaktionen wird auf Basis der Lehre der Momentanpole die geometrische Beziehung der Geräte ermittelt, insbesondere in einem iterativen Prozess, bis alle für die Bewegungs-Regelung nötigen Informationen über die relative Anordnung ermittelt sind.

In den Unteransprüchen, der nachfolgenden Beschreibung und den beigefügten Zeichnungen sind weitere vorteilhafte Ausbildungen der Erfindung angegeben.

Die Erfindung ist in den Zeichnungen beispielhaft und schematisch dargestellt. Es zeigen:
- Figuren 1 u. 2:: Perspektivische Ansichten eines Bediengeräts mit einem Griffteil;
- Figur 3:: Eine Antriebsvorrichtung gemäß einer ersten Ausbildung in Kombination mit einem Container als zu bewegendes Objekt;
- Figuren 4 u. 5:: Eine Antriebsvorrichtung gemäß einer zweiten Ausbildung in Kombination mit einem Krankenhausbett als zu bewegendes Objekt;
- Figur 6:: Eine Antriebsvorrichtung gemäß einer dritten Ausbildung in Kombination mit einem Lastenkarren als zu bewegendes Objekt;
- Figuren 7A-7D:: Erläuterungsdarstellungen zur Ermittlung einer Soll-Bewegung in Abhängigkeit von externen Kräften / Steuerkräften;
- Figuren 8-10:: Erläuterungsdarstellungen zur Ermittlung von externen Kräften an einem Bediengerät;
- Figur 11:: Eine perspektivische Darstellung eines omnidirektionalen Antriebs gemäß einer bevorzugten Ausführung;
- Figur 12:: Eine Beispieldarstellung der Bewegung von zwei omnidirektionalen Antrieben an einer Bewegungseinrichtung.

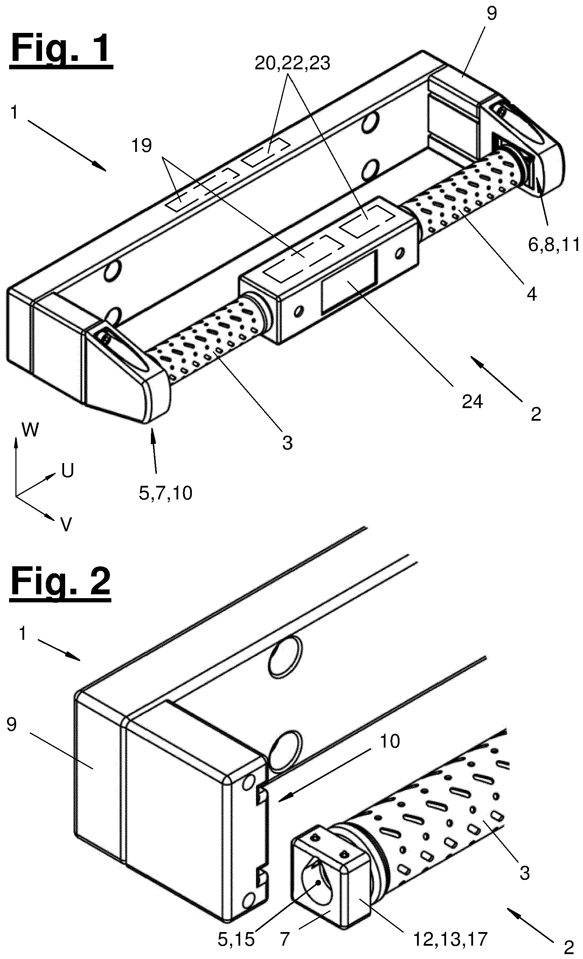

Figur 1 und 2 zeigen eine beispielhafte Ausführung des haptischen Bediengeräts (1) gemäß der vorliegenden Offenbarung. Das Bediengerät (1) umfasst zumindest das Griffteil (2) und als optionales Element die Halterung (9). An dem Griffteil (2) sind die mindestens zwei Greifbereiche (3,4) vorgesehen, an denen das Griffteil von einem Benutzer gegriffen werden kann. Das Griffteil kann eine beliebige Form haben und die Greifbereiche können in beliebiger Weise an dem Griffteil (2) angeordnet sein. Gemäß der bevorzugten Ausführung hat das Griffteil (2) eine längliche Erstreckung. Die Längsrichtung des Griffteils ist in den Zeichnungen mit der Koordinatenrichtung U gekennzeichnet. Zwei dazu orthogonale Richtungen sind als eine erste Querrichtung (V) und eine zweite Querrichtung (W) in den Zeichnungen dargestellt.

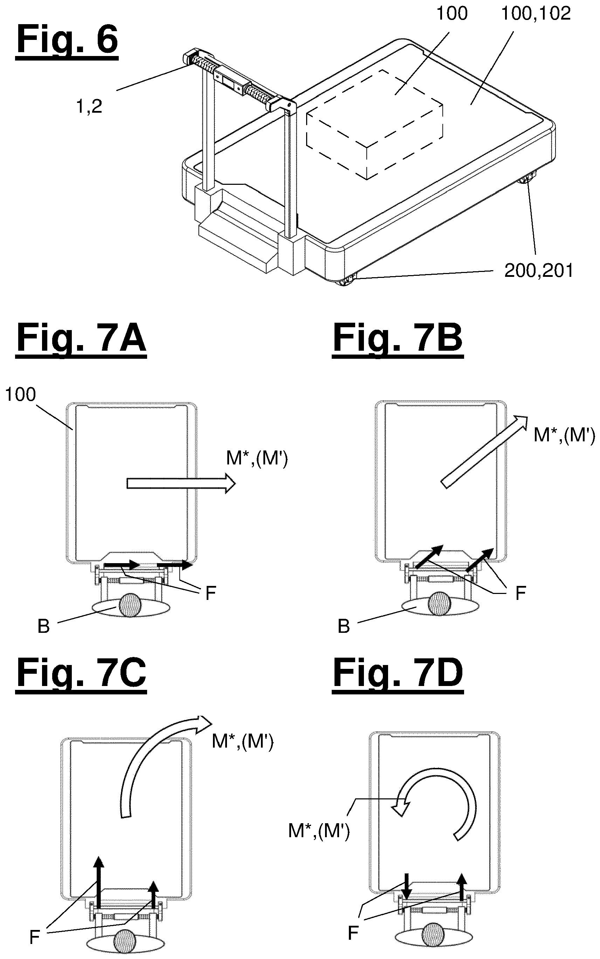

Der erste Greifbereich (3) und der zweite Greifbereich (4) sind bevorzugt in der Längsrichtung U des Griffteils (2) voneinander beabstandet angeordnet. Hierdurch können beim Angreifen mit zwei Händen an dem Griffteil (2) Steuerkräfte aufgebracht werden, die als Vorgabe für eine omnidirektionale Bewegung des zu bewegenden Objekts (100) in der Ebene auswertbar sind. Eine omnidirektionale Bewegung in der Ebene kann translatorische und rotatorische Anteile umfassen, die jeweils separat oder in beliebiger Kombination auftreten können. Figuren 7A bis 7D erläutern beispielhaft verschiedene Soll-Bewegungen (M*) eines zu steuernden Objekts (100), hier in Form eines Karrens, und die hierfür verursachenden Steuerkräfte (F). Gleichsinnig linear und parallel aufgebrachte Kräfte an den beiden Greifbereichen führen entsprechend zu einer gleichsinnigen rein translatorischen Soll-Bewegung, vergleiche Figuren 7A und 7B. Mit unterschiedlichen Beträgen und gleichsinnig an den Greifbereichen aufgebrachte Steuerkräfte sind gemäß der Kräftelehre gleichbedeutend mit dem Aufbringen einer einzigen linearen Kraft und einem überlagernden Drehmoment. Sie bewirken entsprechend eine Soll-Bewegung (M*) auf einer Kurvenbahn, d.h. eine Überlagerung von Translation und Rotation. Dies ist in Figur 7C skizziert.

Gegensinnige lineare Kräfte mit gleichen Beträgen an den Greifbereichen (3,4) führen zu einer Soll-Bewegung (M*) in Form einer reinen Rotation. Dies ist in Figur 7D skizziert.

Es wird davon ausgegangen, dass dem Fachmann die Gesetze der Kinetik und Dynamik sowie das Prinzip der Momentanpole bekannt sind. In den Zeichnungen wird aus Gründen der Vereinfachung davon ausgegangen, dass das Griffteil (2) im Wesentlichen parallel zur Fahrebene für das zu bewegende Objekt (100) ausgerichtet ist und es wird lediglich auf die horizontalen Kraftanteile der extern aufgebrachten Kräfte abgestellt. Die vorliegende Offenbarung ist hierauf nicht beschränkt. Der Fachmann wird erkennen, dass auch andere Orientierungen des Bediengeräts (1) und insbesondere des Griffteils (2) in Relation zur Fahrebene möglich sind. Weiterhin wird der Fachmann erkennen, dass an dem Griffteil (2) externe Kräfte in beliebigen Richtungen und Größen aufbringbar sind, von den etwaig nur bestimmte Richtungsanteile für die Vorgabe einer omnidirektionalen Bewegung in der Ebene berücksichtigt werden.

Gemäß der Darstellung in Figur 1 kann einem Griffteil (2), insbesondere an dem ersten und/oder zweiten Greifbereich (3,4) oder zwischen den Greifbereichen (3,4) ein zusätzliches Schnittstellengerät (24) angeordnet sein. Das Schnittstellengerät (24) kann eine beliebige Ausbildung haben. Es weist bevorzugt einen Eingabebereich und/oder einen Anzeigebereich auf. An dem Anzeigebereich kann beispielsweise eine Betriebsbereitschaft oder eine momentane Einstellung des Bediengeräts und/oder der Antriebsvorrichtung angezeigt sein. Die Anzeige kann in beliebiger Weise erfolgen, beispielsweise durch optische Anzeige und/oder akustische Anzeige. Bevorzugt kann mindestens ein Display zur veränderlichen Anzeige von Bildinformationen und/oder Schrift vorgesehen sein. Der Eingabereich kann ebenfalls beliebig ausgebildet sein. Es können separate Steuerelemente und/oder sensitive Abschnitte an einem Display (Touch-screen) vorgesehen sein. Bevorzugte Verwendungsarten des Schnittstellengeräts (24) werden weiter unten erläutert.

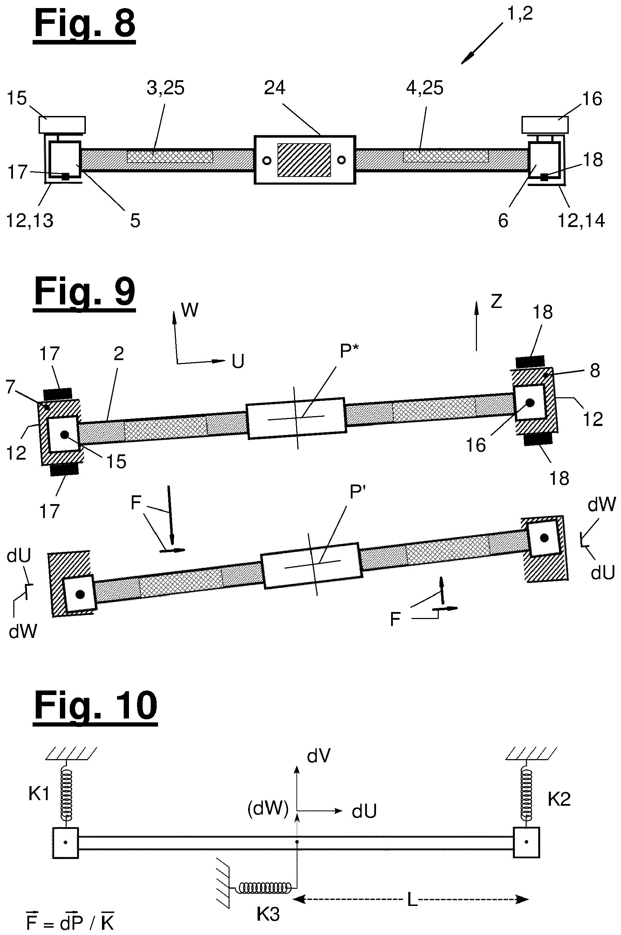

Gemäß einer bevorzugten Ausführungsvariante, die in den Figuren 8 bis 10 weiter erläutert wird, können an dem Griffteil (2) und insbesondere an jedem der Greifbereiche (3,4) ein oder mehrere Greif-Erfassungsmittel (25) angeordnet sein. Ein Greif-Erfassungsmittel (25) stellt fest, ob der jeweilige Greifbereich (3,4) von einer Hand gegriffen ist. Ein Greif-Erfassungsmittel (25) kann hierzu insbesondere als ein kapazitiver Sensor ausgebildet sein oder einen solchen kapazitiven Sensor umfassen. Alternativ ist eine beliebige andere Ausbildung eines Greif-Erfassungsmittels (25) mit hierfür geeigneten bekannten Sensoriken möglich.

Das Bediengerät (2) kann bevorzugt dazu ausgebildet sein, ein Bewegungs-Steuersignal (SM) nur unter der Bedingung auszugeben, dass das Ergreifen mindestens eines Greifbereichs (3,4) oder mindestens zweier Greifbereiche (3,4) erfasst ist. Hierdurch kann das Risiko einer Fehlfunktion vermindert werden, dass ein Bewegungs-Steuersignal (SM) erzeugt wird, wenn eine externe Kraft (F) auf das Griffteil (2) wirkt, die nicht durch die Hände eines Bedieners aufgebracht wird, oder wenn eine Auslenkung des Griffteils aus anderen Gründen als durch externe Steuerkräfte eines Bedieners erfolgt.

Wenn mehrere Bediengeräte (2) mit demselben fahrbaren Objekt verbunden sind, kann vorgesehen sein, dass ein Bewegungs-Steuersignal (SM) nur auf Basis desjenigen oder derjenigen Griffteile erfolgt, bei denen festgestellt ist, dass das das Ergreifen mindestens eines Greifbereichs (3,4) oder mindestens zweier Greifbereiche (3,4) erfasst ist. Somit kann für jedes Bediengerät separat eine Sicherungsfunktion erreicht werden.

Figuren 8 bis 10 erläutern beispielhaft die Ausbildung der nachgiebigen Lagerelemente (7,8) und eine Funktionalität zur Eingabe von Steuerbefehlen für die Bewegung des Objektes (100).

Figur 8 zeigt eine schematische Draufsicht auf ein Griffteil (2), dass über endseitige Lagerelemente (7,8) in einer Referenzposition gehalten ist. Die Lagerelemente (7,8) können an beliebiger Stelle angeordnet sein. Bevorzugt ist je ein nachgiebiges Lagerelement (7,8) an einem Ende des Griffteils (2) angeordnet. Die mindestens zwei Greifbereiche (3,4) sind bevorzugt zwischen diesem Lagerelement (7,8) angeordnet.

An oder in jedem der Lagerelemente (7,8) ist ein Lager-Sensorabschnitt (13,14) vorgesehen. Dieser korrespondiert mit dem jeweiligen Griffteil-Sensorabschnitt (5,6) am Griffteil (2). Gemäß einer bevorzugten Ausführung ist ein erster Griffteil-Sensorabschnitt innerhalb des ersten Lagerelements (7) angeordnet und ein erster Lager-Sensorabschnitt (13) an einer Außenkontur des ersten Lagerelements (7) angeordnet. Analog ist bevorzugt weiterhin ein zweiter Griffteil-Sensorabschnitt (6) innerhalb eines zweiten Lagerelements (8) angeordnet und ein zweiter Lager-Sensorabschnitt (14) ist an einer Außenkontur des zweiten Lagerelements (8) angeordnet.

Der erste Griffteil-Sensorabschnitt und der erste Lager-Sensorabschnitt bilden ein erstes Paar von korrespondierenden Sensorabschnitten. Der zweite Griffteil-Sensorabschnitt und der zweite Lagersensorabschnitt bilden zusammen ein zweites Paar von korrespondierenden Sensorabschnitten. An jedem dieser Paare von korrespondierenden Sensorabschnitten ist mind. ein Auslenkungssensor (15,16) derart angeordnet, dass die Auslenkung (dP) des Griffteils (2) erfassbar ist. Der Auslenkungssensor kann dabei nach Belieben an dem Griffteil-Sensorabschnitt und/oder an dem Lager-Sensorabschnitt angeordnet sein. Ferner kann mind. ein Mess-Objekt (17,18) vorgesehen sein, dessen momentane Lage direkt oder indirekt durch den Auslenkungssensor (15,16) erfasst wird. In dem Beispiel von Figur 8 ist jeweils ein Mess-Objekt (17,18) an dem ersten und zweiten Griffteil-Sensorabschnitt (5,6) angeordnet. Ferner ist jeweils ein Auslenkungssensor (15,16) an dem ersten und zweiten Lager-Sensorabschnitt (13,14) vorgesehen. In dem Beispiel von Figur 9 ist die Anordnung umgekehrt, d.h. die Auslenkungssensoren (15,16) sind am Griffteil-Sensorabschnitt (5,6) vorgesehen und die Mess-Objekte (17,18) am Lager-Sensorabschnitt (13,14).

Die Mess-Objekte (17,18) sind in den Beispielen der Figuren 1, 7 und 8 als Magnete ausgebildet. Die Auslenkungssensoren (15,16) sind als Hall-Sensoren ausgebildet. Alternativ sind beliebige andere Messungsarten und Sensoriken möglich, insbesondere auf Basis von Induktivität, Kapazität, Magnetorestriktivität, Piezo-Effekt, Dichteänderung, Druckänderung, Lichtänderung usw.

Gemäß einer bevorzugten Ausführung wird an dem haptischen Bediengerät (1) eine zumindest zweidimensionale Auslenkung des Griffteils (2) erfasst, aus der die extern auf das Griffteil wirkenden Steuerkräfte (F) berechnet werden. Der Begriff Steuerkräfte (F) umfasst dabei sowohl lineare Kräfte als auch Drehmomente. Die Auslenkung kann an jedem der Lagerelemente (7, 8) als mehrachsige Auslenkungen erfasst werden. Gemäß einer bevorzugten Ausführung ist an jedem Lagerelement genau ein Auslenkungssensor angeordnet, der eine zweiachsige oder eine dreiachsige (lokale) Auslenkungen erfasst. Gemäß einer weiteren bevorzugten Ausführung sind an jedem der Lagerelemente (7, 8) genau zwei Auslenkungssensoren angeordnet, die jeweils eine zweiachsige oder eine dreiachsige (lokale) Auslenkung erfassen. Die Berechnung der Kräfte erfolgt insbesondere auf Basis einer bekannten Steifigkeit oder Resilienz (K) der nachgiebigen Lagerelemente (7,8). Figur 10 erläutert beispielhaft, wie die Gesamt-Steifigkeit (K) der Lagerung und die partiellen Steifigkeiten (K1,K2,K3) modelliert werden können. Die externen Kräfte (F) sind aus einer entsprechenden lokalen Auslenkung im Bereich der Lagerelemente (7,8) in den Querrichtungen (V,W) sowie in einer Längsrichtung (U) modellierbar bzw. berechenbar, insbesondere durch Superposition. Die partiellen Steifigkeiten (K1, K2, K3) können für zwei oder mehr Verformungsrichtungen der Lagerelemente / Auslenkungsrichtungen (U, V, W) separat bekannt sein. Bevorzugt sind für jedes Lagerelement die jeweiligen partiellen Steifigkeiten (K1, K2, K3) bekannt. Alternativ oder zusätzlich können die partiellen Steifigkeiten (K1, K2, K3) für die Gesamtheit der Lagerelemente bekannt sein. Zwischen den partiellen Steifigkeiten der Einzel-Lagerelemente und den partiellen Steifigkeiten der Gesamtheit der Lagerelemente kann bei bekannter Geometrie umgerechnet werden. Dementsprechend kann aus einer anteiligen Auslenkung (dU,dV,dW) an den Lagerelementen (7,8) auf eine Gesamt-Auslenkung rückgeschlossen werden und weiterhin sind die jeweils anteiligen und richtungsbezogenen Kräfte und Momente berechenbar.

Das haptische Bediengerät (1) gemäß der vorliegenden Offenbarung umfasst eine Kommando-Steuerung (15). Diese ist mit den Auslenkungssensoren (15,16) verbunden und dazu ausgebildet, ein Bewegungs-Steuersignal (SM) für die Soll-Bewegung (M*) des fahrbaren Objektes (100) zu berechnen. Die Kommando-Steuerung (15) ist hierzu direkt oder indirekt mit den Auslenkungssensoren (15,16) verbunden und bezieht Messdaten über die dort erfasste Auslenkung (dP) bzw. eine Abweichung der ausgelenkten Position (P') von der Referenz-Position (P*). Die Kommando-Steuerung (15) ist ferner dazu ausgebildet, aus dieser erfassten Auslenkung (dP) auf die externen Kräfte (F) rückzuschließen und/oder ein den externen Kräften (F) in Richtung und Betrag entsprechendes Bewegungs-Steuersignal (SM) zu berechnen.

Das Bediengerät (1) umfasst weiter bevorzugt eine Kommunikationseinrichtung (20), die dazu ausgebildet ist, das Bewegungs-Steuersignal (SM) an eine externe Bewegungs-Regeleinrichtung (202) zu übermitteln. Die Kommunikationseinrichtung (20) kann bevorzugt zur drahtlosen Kommunikation ausgebildet sein, beispielsweise durch Funksignale, Infrarotsignale oder einen beliebigen bekannten Kommunikationsstandard wie Bluetooth, W-LAN, NFC usw. Alternativ oder zusätzlich kann die Kommunikationseinrichtung (20) zur drahtgebundenen Kommunikation ausgebildet sein, beispielsweise über ein Bus-System.

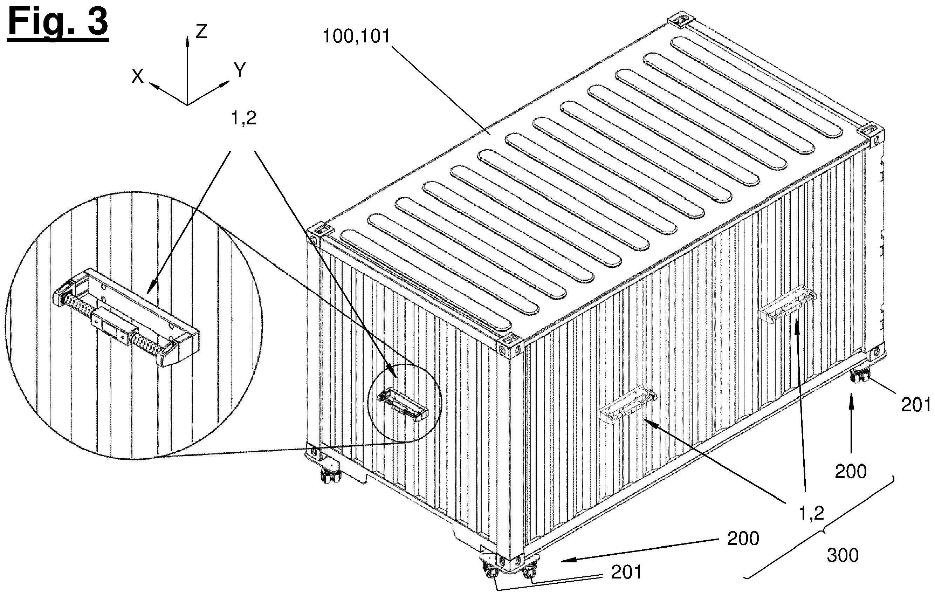

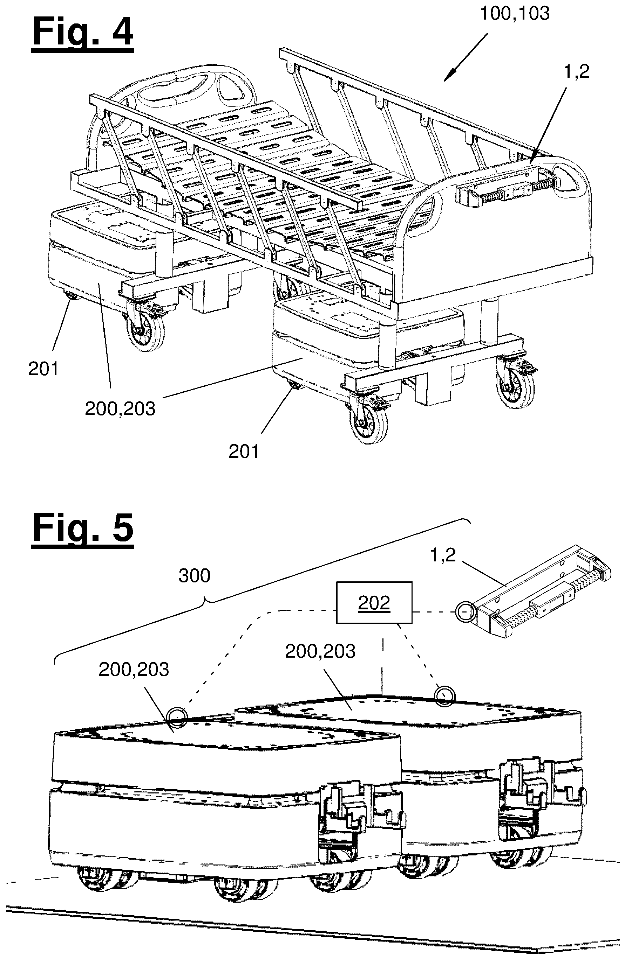

Die Halterung (9) zur Aufnahme des Griffteils (2) kann eine beliebige Ausbildung haben. Sie kann als ein separates Teil ausgebildet und von dem haptischen Bediengerät (1) umfasst sein. In diesem Fall kann das Bediengerät (1) über die Halterung (9) an einem zu bewegenden fahrbaren Objekt (100) befestigt sein. Beispiele hierfür sind in den Figuren 3 und 4 angegeben. In dem Beispiel von Figur 3 wird ein haptisches Bediengerät (1), das über eine eigene Halterung (9) verfügt, an einem fahrbaren Objekt (100) in Form eines Containers oder Frachtcontainers (101) angeordnet. In dem Beispiel von Figur 4 wird ein solches haptisches Bediengerät (1) an einem zu bewegenden Objekt (100) in Form eines Bettes und insbesondere Krankenhausbettes (103) angeordnet.

Die Halterung (9) ist bevorzugt dazu ausgebildet, als Modulbauteil wechselweise an zwei, drei oder mehr unterschiedlichen fahrbaren Objekten (100) angeordnet und insbesondere befestigt zu werden. Die Halterung (9) weist entsprechend bevorzugt eine vorbereitete Befestigungs-Schnittstelle (21) auf, die zur Befestigung an dem fahrbaren Objekt (100) ausgebildet ist.

Die vorbereitete Befestigungs-Schnittstelle (21) kann besonders bevorzugt eine Magnethalterung und/oder eine Saug-/Unterdruckhalterung umfassen. Alternativ oder zusätzlich kann die Befestigungs-Schnittstelle (21) für eine Befestigung durch Schrauben oder Kleben ausgebildet sein.

Eine zweite bevorzugte Ausführung sieht vor, dass das haptische Bediengerät (1) lediglich das Griffteil (2) und die Lagerelemente (7,8) sowie die Auslenkungssensorik umfasst, jedoch keine eigene Halterung (9). In diesem Fall kann das Griffteil (2) in vorgefertigte Aufnahmen an dem zu bewegenden Objekt eingesetzt werden. Dies ist beispielhaft in Figur 6 erläutert, wo das haptische Bediengerät (1) an einem fahrbaren Objekt (100) in der Form eines Karrens oder Portalkarrens (102) angeordnet ist.

Die Kommando-Steuerung (19) und/oder die Kommunikationseinrichtung (20) und/oder eine Energieversorgung (23) können entsprechend an oder in dem Griffteil (2) angeordnet sein oder aber an der Halterung (9) angeordnet sein.

Da das haptische Bediengerät (1) von einem Benutzer als modulares Element an einem zu bewegenden fahrbaren Objekt (100) anordenbar ist, kann eine Anordnungsposition und eine Raumlage des Bedienteils (1) relativ zu der Fahrebene des zu bewegenden Objektes (100) veränderlich sein und/oder gewissen Toleranzen unterliegen. Insbesondere können Abweichungen der Längsrichtung (U) und Querrichtungen (V, W) des Griffteils (2) (in der Referenzposition) von der Horizontal- und Vertikalrichtung bzw. von der Erstreckung der Fahrebene in beliebiger Weise auftreten.

Gemäß einer bevorzugten Ausführung kann das haptische Bediengerät (1) gemäß der vorliegenden Offenbarung einen Raumlagesensor (22) umfassen, der dazu ausgebildet ist, die (momentane) Raumlage des Griffteils (2) gegenüber einer externen Referenzrichtung zu ermitteln. Die externe Referenzrichtung kann beliebig definiert sein. Es kann sich dabei insbesondere um die Gravitationsrichtung Z handeln. Alternativ kann eine beliebige andere Richtung und insbesondere eine Orthogonale zur Fahrebene als Referenzrichtung vorgesehen sein.

Durch den Raumlagesensor (22) kann somit eine Koordinatentransformation zwischen einem Raum-Koordinatensystem und den Richtungsbezügen (U, V, W) des Bedienteils (2) ermöglicht sein.

Mit anderen Worten ist die Kommando-Steuerung (19) bevorzugt dazu ausgebildet, eine Raumlage des Griffteils (2) in Bezug auf eine externe Referenzrichtung zu erfassen und die Auslenkung (dP) des Griffteils (2), welche in Bezug auf die Richtungsbezüge (U, V, W) des Bedienteils (2) erfasst ist, derart in das Bewegungs-Steuersignal (SM) umzusetzen, dass die Soll-Bewegung (M*) in Bezug auf diese externe Referenzrichtung angegeben ist. Die externe Referenzrichtung kann dabei insbesondere die Gravitationsrichtung Z sein. Alternativ kann es sich um eine beliebige andere Richtung und insbesondere eine Orthogonale zur Fahrebene handeln.

Das haptische Bediengerät (1) gemäß der vorliegenden Offenbarung kann zur Steuerung von beliebigen Antriebsvorrichtungen vorgesehen und ausgebildet sein. Es ist insbesondere dazu ausgebildet, Steuervorgaben für eine omnidirektionale Bewegung in der Ebene zu ermitteln und zu kommunizieren. Diese Steuervorgaben werden als ein Bewegungs-Steuersignal (SM) ausgesendet und in einer Bewegungs-Regeleinrichtung (202) in angetriebene und gesteuerte Fahrbewegungen umgesetzt. Das Bediengerät (1) ist bevorzugt dazu ausgebildet, zwei oder mehr Implementierungsarten zu unterstützen, um eine abgestimmte angetriebene Bewegung an zwei, drei oder mehr Antriebseinheiten (201) herbeizuführen. Die Antriebseinheiten (201) können dabei direkt an dem zu bewegenden Objekt (100) angeordnet sein (vgl. Figur 3, Bewegung eines Frachtcontainers) oder einzeln oder gruppenweise an zwei oder mehr Bewegungseinrichtungen (200) angeordnet sein (vgl. Figuren 4 und 5, Bewegung eines Krankenhausbetts mit kollaborativen Roboterplattformen).

Die Antriebsvorrichtung zur Bereitstellung eines gesteuerten Fahrantriebs (für eine omnidirektionale angetriebene Fahrbewegung in der Ebene) für ein Objekt (100) kann also in sehr unterschiedlicher Weise ausgebildet sein. Sie umfasst insbesondere mind. ein Bediengerät (1) gemäß der vorliegenden Offenbarung und mind. eine Bewegungseinrichtung (200), die zur gesteuerten und angetriebenen omnidirektionalen Bewegung in der Ebene vorgesehen und ausgebildet ist.

Die Bewegungs-Regeleinrichtung (202) kann durch eine separate Implementierung, eine verteilte Implementierung oder eine im Bediengerät integrierte Implementierung gebildet sein. Die Implementierungsart kann dauerhaft vorgegeben sein oder sich zeitweise oder wechselweise ändern.

Bei der separaten Implementierung ist die Bewegungs-Regeleinrichtung (202) durch eine separate Global-Steuereinrichtung gebildet, die bevorzugt alle omnidirektionalen Fahrantriebe der ein oder mehreren Bewegungseinrichtungen (200) gemeinsam steuert.

In der verteilten Implementierung ist die Bewegungs-Regeleinrichtung (202) an einer ersten Bewegungseinrichtung (200) gebildet und mit mind. einer weiteren Regional-Steuereinrichtung (205) an einer zweiten Bewegungseinrichtung (200) kommunikativ verbunden. Die Kommunikation kann insbesondere im Rahmen einer Master-Slave-Kommunikation oder in einer in sonstiger Weise abgestimmten Kommunikation erfolgen, beispielsweise nach einem Peer-to-Peer-Konzept.

Bei der im Bediengerät integrierten Implementierung kann die Bewegungs-Regeleinrichtung (202) in die Kommando-Steuerung (19) des mind. einen Bediengeräts (2) integriert sein und mit mind. einer Steuereinrichtung einer Bewegungs-Vorrichtung (200) kommunizieren.

Das mind. eine Bediengerät (2) sendet ein Bewegungs-Steuersignal (SM) an die Bewegungs-Regeleinrichtung (202). Die Bewegungs-Regeleinrichtung (202) empfängt entsprechend ein Bewegungs-Steuersignal (SM) und steuert die mind. eine Bewegungseinrichtung (200) derart, dass die Ist-Bewegung (M') des zu fahrenden Objektes (100) der Soll-Bewegung (M*) angenähert wird. Die Steuerung wirkt sich insbesondere auf die mind. eine omnidirektionale Antriebseinheit (202) an der Bewegungseinrichtung (200) aus.

Mit anderen Worten ist die Bewegungs-Regeleinrichtung (202) dazu vorgesehen und ausgebildet, konkrete physische Fahrbewegungen herbeizuführen, die eine Ist-Bewegung (M*) des zu fahrenden Objektes (100) gem. der empfangenen Soll-Bewegung (M*) entspricht.

Die Antriebsvorrichtung (300) und insbesondere die Bewegungs-Regeleinrichtung (202) sieht dabei bevorzugt eine Kraftregelung für die Bewegung des Objekts (100) und entsprechend für die gesteuerte angetriebene Fahrbewegung vor. Diese Kraftregelung ist weiterhin insbesondere eine Impedanz-Regelung und/oder eine Admittanz-Regelung.

Die Kraftregelung ist insbesondere derart ausgebildet, dass die am Bediengerät (2) für einen Benutzer haptisch wahrnehmbaren Ist-Reaktionskräfte während einer Bewegung des Objektes (100) im Vergleich zu den hypothetischen Reaktionskräften, die für die Bewegung des Objektes ohne einen unterstützenden geregelten Antrieb auftreten würden, in den Richtungsbezügen übereinstimmen und in der Höhe vermindert sind. Die Regelung erfolgt insbesondere derart, dass die Ist-Reaktionskräfte (die der Benutzer an dem mind. einen Bediengerät fühlt) ein proportionales Abbild der hypothetischen Reaktionskräfte sind und sich weiterhin der Bewegungsvorgang für den Benutzer so anfühlt, als sei die Masse und/oder Trägheit des Objektes reduziert.

Gemäß einem besonders hervorzuhebenden Aspekt der vorliegenden Offenbarung kann die Antriebsvorrichtung eine beliebige Anzahl von Bediengeräten sowie Bewegungseinrichtungen umfassen. Sie kann also zwei oder mehr Bediengeräte (2) umfassen, die an demselben Objekt (100) anordenbar oder angeordnet sind. Dies ist beispielhaft in Figur 3 (Bewegung eines Frachtcontainers) dargestellt. Die Bewegungs-Steuersignale (SM) dieser mehreren Bediengeräte (2) können in der Regelung der Ist-Bewegung (M') des Objekts (100) gemeinsam berücksichtigt werden. Die gemeinsame Berücksichtigung kann eine gleichzeitige Berücksichtigung und/oder eine wechselweise Berücksichtigung umfassen. Bei der gleichzeitigen Berücksichtigung kann insbesondere eine Superposition der Bewegungs-Steuersignale (SM) bzw. der jeweiligen Parameter für die Soll-Bewegung (M*) des Objekts umfassen. Das Ergebnis kann insbesondere eine proportional verstärkte Bewegung sein gegenüber derjenigen hypothetischen Bewegung, die sich ohne eine Kraftverstärkung aus den mehrfachen externen Kräften (F) ergeben würde, die an den Bediengeräten (1) angreifen. Somit kann sich auch für eine Mehrzahl von Bedienpersonen, die gleichzeitig ein zu bewegendes Objekt (100) mit Angreifen an den Bediengeräten (1) schieben oder ziehen, so anfühlen, als hätte das Objekt eine reduzierte Masse oder Trägheit.

Eine besonders bevorzugte Ausführungsform sieht vor, dass die mind. eine Bewegungseinrichtung (200) als eine kollaborative Roboterplattform (203) ausgebildet ist. Dies ist in Figuren 4 und 5 beispielhaft skizziert. Die Roboterplattform (200) ist zur omnidirektionalen Bewegung in der Ebene ausgebildet. Sie kann ein oder mehrere Manipulatorwerkzeuge umfassen, um auf externe Objekte einzuwirken. Dazu können insbesondere Greifwerkzeuge und kraft- oder formschlüssige Kupplungen gehören, durch die die Roboterplattform mit einem externen Objekt kraft- oder formschlüssig verbindbar ist. Gemäß einer bevorzugten Ausführung kann eine Roboterplattform dazu ausgebildet sein, zeitweise eine kraft- oder formschlüssige Verbindung mit einem zu bewegenden Objekt (100) einzugehen, das beispielsweise ein Krankenhausbett, eine Untersuchungseinrichtung oder ein sonstiges bewegliches Objekt sein kann. Alternativ oder zusätzlich kann eine Roboterplattform dazu ausgebildet sein, ein oder mehrere Objekte aufzuladen.

Die Antriebsvorrichtung gemäß der vorliegenden Offenbarung sieht vor, dass die Bewegungs-Regelung von zwei oder mehr Roboterplattformen synchronisierbar ist. Die Synchronisierung erfolgt insbesondere derart, dass zwei oder mehr Roboterplattformen gemeinsam mit dem zu bewegenden Objekt eine Gesamt-Bewegung ausführen, die mit der Soll-Bewegung (M*) für das Objekt korrespondiert. Dabei sind die Partialbewegungen der Roboterplattformen (203) gemäß der Momentanpol-Lehre aus der Soll-Bewegung (M*) für das Objekt (100) ermittelt und insbesondere berechnet. Die Bewegungs-Regelung und insbesondere die Kraftregelung für die Bewegungseinrichtung und insbesondere die Roboterplattformen (203) kann weiterhin bevorzugt mind. zwei oder mehr der offenbarten Autonomielevel vorsehen. Beispielsweise kann während einer direkten Steuerung eines Krankenhausbettes, bei der ein Benutzer ein haptisches Bediengerät (1) greift, das an einem Krankenhausbett (103) angeordnet ist, eine unbeschränkte Kraft- oder Momenten-Verstärkung vorsehen. Diese kann insbesondere durch die offenbarte Admittanz-Regelung erfolgen. Somit kann ein Benutzer bei minimalem Kraftaufwand und ohne Hilfe durch eine weitere Person ein Krankenhausbett oder ein vergleichbares zu fahrendes Objekt mühelos bewegen und dabei voll die Gesamtbewegung des Objektes sowie der Bewegungseinrichtung (202) steuern. Der Bediener hat dabei selbst dafür Sorge zu tragen, dass beispielsweise eine geeignete Bewegungsbahn gefunden wird und keine Kollisionen mit der Umgebung stattfinden.

Alternativ oder zusätzlich kann gem. dem Autonomielevel (2) eine Kraft- oder Momentenverstärkung mit Einschränkung der steuerbaren Freiheitsgrade der Bewegung vorgesehen sein. Dabei kann insbesondere eine Bewegung durch reine Translation und/oder reine Rotation vorgegeben sein. Hierfür kann die Bedienperson beispielsweise über das Schnittstellengerät (24) eine entsprechende Einschränkung der steuerbaren Freiheitsgrade vorgeben. Eine reine Translation kann beispielsweise dann hilfreich sein, wenn ein Krankenhausbett in einem besonders schmalen Abstellbereich bugsiert werden soll oder durch einen schmalen Durchgang, wie einen Türrahmen, bewegt werden soll. Eine reine Rotation kann erwünscht sein, wenn das Krankenhausbett oder das zu bewegende Objekt (100) auf möglichst engem Raum gewendet werden soll. Bei der Steuerung kann das Zentrum für die Rotation oder einen Rotationsanteil der Bewegung durch die Bedienperson festgelegt werden. Das Zentrum kann beispielsweise in die geometrische Mitte oder den Schwerpunkt des zu fahrenden Objektes (100) verlegt werden, so dass eine Drehung mit minimalem Wendekreis erreicht wird. Alternativ kann das Zentrum für die Rotation in den Standpunkt der Bedienperson verlegt werden, so dass im Wesentlichen eine Schwenkbewegung des zu fahrenden Objektes um den Körper der Bedienperson erfolgt.

Eine Kraftregelung auf dem dritten Autonomielevel kann geeignet sein, um eine Wahrnehmungsunterstützung für die Bedienperson oder eine Unfallvermeidung zu bewirken. Hierbei kann eine Kraft- oder Momentenverstärkung mit einer Zonenvermeidungsregelung vorgesehen sein. Die Zonenvermeidungsregelung vermeidet eine zu starke Annäherung (des zu fahrenden Objektes (100) und/oder der Bewegungseinrichtungen (200)) an bestimmte Umgebungszonen. Alternativ oder zusätzlich kann das Einfahren in solche Umgebungszonen vermieden werden. Die Umgebungszonen können dabei frei bestimmt sein. Es kann sich insbesondere um Zonen handeln, in denen eine Bewegungseinschränkung erfasst wird. Eine Bewegungseinschränkung kann beispielsweise vorliegen, wenn ein bestimmter Raum nicht befahrbar ist, wie beispielsweise ein Treppenhaus oder ein rein für den Personentransport vorgesehener Aufzug. Andererseits kann eine Bewegungseinschränkung vorliegen, wenn im Fahrbereich ein externes Kollisionsobjekt erkannt wird.

Auf dem vierten Autonomielevel kann eine teilautomatisierte Bewegung von zu fahrenden Objekten (100) und/oder einzelner Bewegungseinrichtungen (200) erreicht werden. Hier wird die Regelung der Ist-Bewegung nach einer vorgegebenen oder von der Antriebsvorrichtung autonom festgelegten Trajektorie durchgeführt. Der Benutzer braucht dann nur die Geschwindigkeit oder das quantitative Ausmaß der Bewegung vorzugeben. Im Krankenhausbereich kann dies beispielsweise für den Transport von Betten auf den Gängen vorgegeben sein. Beispielsweise können auf einem Gang Trajektorien für die Definition von Verkehrswegen oder Fahrspuren definiert sein, die das gleichzeitige Bewegen von zu verfahrenden Objekten (100) im Gegenverkehr gestatten. So kann beispielsweise für das Verfahren von Krankenhausbetten von Süden nach Norden eine östliche Fahrbahn gewählt sein und für das Transportieren von Betten in der Gegenrichtung von Nord nach Süd eine westliche Fahrbahn reserviert sein. Durch die Vorgabe der Fahrbahnen bzw. Trajektorien kann auch das sehr schnelle Bewegen von schweren Objekten ohne die Gefahr einer Kollision erreicht werden. Insbesondere unter hoher Auslastung kann damit die Gefahr von Unfällen stark vermindert werden und gleichzeitig kann der Transport von Behandlungsmaterialien oder Patienten bei einem stark erhöhten Durchsatz erfolgen.

Auf dem fünften Autonomielevel kann eine zumindest zeitweise vollständig autonome Bewegungsregelung vorgesehen sein, die entweder nur ein oder mehrere Bewegungseinrichtungen oder auch die gemeinsame Bewegung mit einem zu bewegenden Objekt (100) betrifft. Eine vollautonome Bewegung kann beispielsweise für das Aufladen der Roboterplattformen an einer Ladestation vorgesehen sein und/oder für das vollautomatisierte Einlagern von Krankenhausbetten oder sonstigen Objekten. Weiterhin kann das Andocken einer Bewegungseinrichtung und insbesondere einer Roboterplattform (203) an einem zu bewegenden Objekt (100) mit einer autonomen Bewegungsregelung stattfinden, bei der sich die Bewegungseinrichtung selbst den besten Anfahrweg zum Objekt (100) auswählt.

Die vorgenannten Beispiele, die auf den Kontext der Bewegung von Objekten im medizinischen Bereich und insbesondere in Krankenhäusern ausgerichtet sind, können auf beliebige andere Anwendungen übertragen werden, beispielsweise auf die Bewegung von Objekten im industriellen Fertigungsumfeld. Für den medizinischen Bereich und Krankenhausbereich hat die offenbarte Technologie jedoch einen besonderen Vorteil, weil sie dort die Bewegung von Objekten bei gleichzeitiger Präsenz von Fachpersonal aber auch fremden Personen ermöglicht. Die offenbarte Steuertechnik ist insbesondere so intuitiv, dass sie auch von ungeschulten Personen sofort verstanden wird. So kann auch das Bewegen von Objekten im Notfall, wie beispielsweise bei einer Evakuierung, unterstützt werden, so dass Fluchtwege leicht geräumt und beispielsweise Brandschutztüren nicht blockiert werden.

Abwandlungen der Erfindung sind in verschiedener Weise möglich. Insbesondere können die zu den jeweiligen Ausführungsbeispielen gezeigten, beschriebenen, beanspruchten oder in sonstiger Weise offenbarten Merkmale in beliebiger Weise miteinander kombiniert, gegeneinander ersetzt, ergänzt oder weggelassen werden.

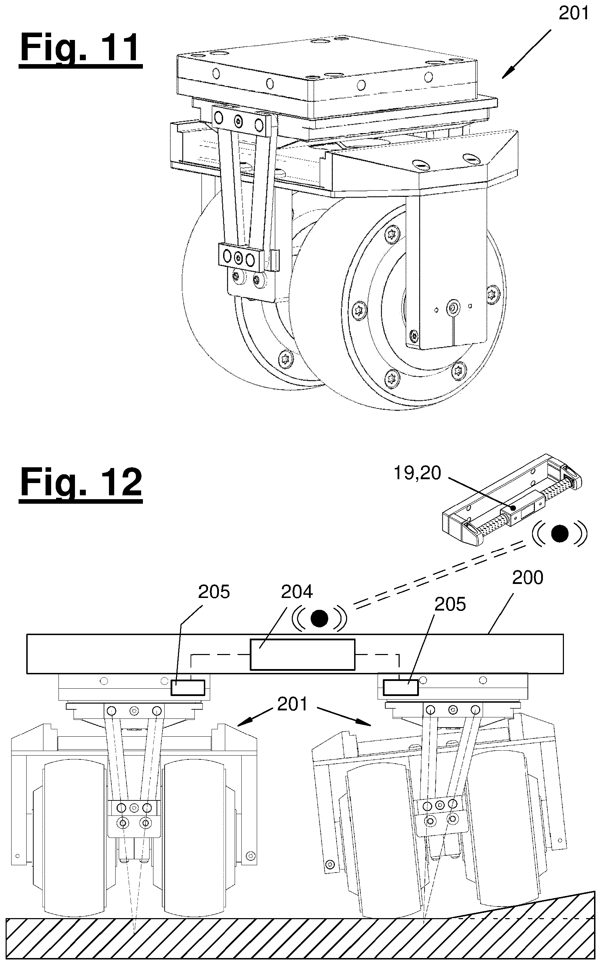

Figuren 11 und 12 zeigen eine bevorzugte Ausführungsvariante einer omnidirektionalen Antriebseinheit (201), die für sich allein oder in Kombination mit weiteren Antriebseinheiten eine Bewegungseinrichtung (200) bilden kann. Sie weist zwei entlang der Drehachse benachbarte und separat gesteuert antreibbare Räder auf. Die Räder sind an einem gemeinsamen Schwenkradträger angeordnet, der wiederum um eine Lenkachse gegenüber einem Flanschkörper drehbar gelagert ist. Der Flanschkörper kann fest mit einer Bewegungseinrichtung (200) verbunden sein. Die Lenkachse ist windschief gegenüber der Drehachse versetzt. Der Schwenkradträger kann zweiteilig ausgebildet sein, wobei der untere Teil, an den die Drehachse der Räder befestigt ist, gegenüber dem oberen Teil, der mit der Lenkachse verbunden ist, kippbar gelagert ist. Auf diese Weise können die Räder bei der Fahrt Unebenheiten im Untergrund ausgleichen, ohne dass eines der Räder den Haftkontakt zum Untergrund verlieren würde.

Jeder der Antriebseinheiten (201) kann über eine eigene Regional-Steuereinrichtung (205) verfügen, die dazu ausgebildet ist, die Radbewegungen jeweils separat vorzugeben. Eine Global-Steuereinrichtung (204) kann mit den Regional-Steuereinrichtungen (205) gemäß den obigen Ausführungen kommunizieren. Alternativ kann eine direkte Kommunikation zwischen der Kommando-Steuerung (19) des Bediengeräts (1) und den Regional-Steuereinrichtungen (5) gemäß den obigen Ausführungen erfolgen.

Die sonstige Ausbildung der Antriebseinheit (201) kann beliebig gewählt sein. Die Ausbildung kann insbesondere gemäß der nicht veröffentlichten deutschen Gebrauchsmusteranmeldung 20 2020 101 616.4 gewählt sein.

In einer bevorzugten Ausführung, die in den Figuren gezeigt ist, hat das Griffteil eine längliche Erstreckung, insbesondere die Grundform einer gerade Stange. Alternativ kann das Griffteil eine einfach oder mehrfach gebogene Form haben.

Das Griffteil ist bevorzugt ein in sich starrer Körper. Die (mindestens) zwei Lagerelemente sind bevorzugt in einer Längsrichtung des Griffteils zueinander beabstandet angeordnet.

Bevorzugt ist jedes Lagerelement einerseits mit dem Griffteil und andererseits mit der Halterung verbunden.

Eine Variante des Bediengeräts, die in den Zeichnungen nicht dargestellt ist, fasst mindestens drei Lagerelemente auf, die jeweils einerseits mit dem Griffteil und andererseits mit der Halterung verbunden ist. Zwischen zwei Lagerelementen ist bevorzugt jeweils mindestens ein Greifbereich vorgesehen.

Das Griffteil kann ringförmig ausgebildet sein und (mindestens) zwei Lagerelemente aufweisen, die im Umfangsrichtung des Griffteils zueinander beabstandet angeordnet sind. Bevorzugt ist jeweils ein Lagerelement zwischen zwei Greifbereichen und/oder jeweils ein Greifbereich zwischen zwei Lagerelementen vorgesehen. Das ringförmige Griffteil kann das fahrbare Objekt oder einen Teilabschnitt der fahrbaren Objektes umgreifen und insbesondere einen aus allen Radialrichtungen zugänglichen Ringgriff bilden. Das Griffteil kann zwei, drei oder mehr Lagerelemente aufweisen, die über den Umfang verteilt angeordnet sind.

Die vorliegende Offenbarung umfasst mehrere besonders bevorzugte Ausbildungen, die mit jedem Aspekt der Offenbarung einzeln oder in beliebiger Kombination genutzt werden können und nachfolgend zusammengefasst sind.

Gemäß einer ersten Ausbildung umfasst das Bediengerät eine Kommunikationseinrichtung (21) und übermittelt (über die Kommunikationseinrichtung (21)) das Bewegungs-Steuersignal (SM) an eine externe Bewegungs-Regeleinrichtung (202).

Gemäß einer weiteren Ausbildung umfasst das Bediengerät (1) die Halterung (9), Die Halterung (9) weist bevorzugt eine vorbereitete Befestigungs-Schnittstelle (21) auf, die zur Befestigung an dem fahrbaren Objekt (100) ausgebildet ist. Die vorbereitete Befestigungs-Schnittstelle (21) umfasst weiterhin bevorzugt eine Magnethalterung.

Gemäß einer weiteren Ausbildung sind die Kommando-Steuerung (19) und/oder die Kommunikationseinrichtung (20) und/oder eine Energieversorgung (23)
- an oder in dem Griffteil (2); oder
- an der Halterung (9) angeordnet.

Gemäß einer weiteren Ausbildung hat das Griffteil (2) eine längliche Erstreckung und der erste Greifbereich (3) und der zweite Greifbereich (4) sind in der Längsrichtung (U) des Griffteils (2) voneinander beabstandet angeordnet.

Gemäß einer weiteren Ausbildung ist an dem Griffteil (2), insbesondere zwischen dem ersten und zweiten Greifbereich (3, 4), eine zusätzliches Schnittstellengerät (24) mit einem Eingabebereich und/oder einem Anzeigebereich angeordnet.

Gemäß einer weiteren Ausbildung sind an dem Griffteil (2), insbesondere an jedem der Greifbereiche (3, 4), ein oder mehrere Greif-Erfassungsmittel (25) angeordnet, die feststellen, ob der jeweilige Greifbereich (3, 4) von einer Hand gegriffen ist, wobei ein Greif-Erfassungsmittel (25) insbesondere einen kapazitiven Sensor umfasst.

Gemäß einer weiteren Ausbildung ist das Bediengerät (2) dazu ausgebildet, ein Bewegungs-Steuersignal (SM) nur unter der Bedingung auszugeben, dass das Ergreifen mindestens eines Greifbereichs (3, 4) oder mindestens zweier Greifbereiche (3, 4) erfasst ist.

Gemäß einer weiteren Ausbildung sendet das mindestens eine Bediengerät (2) ein Bewegungs-Steuersignal (SM) an die Bewegungs-Regeleinrichtung (202) und die Bewegungs-Regeleinrichtung (202) steuert die mindestens eine Bewegungseinrichtung, und insbesondere die mindestens eine omnidirektionale Antriebseinheit (202), derart, dass die Ist-Bewegung (M') des Objekts (100) der Soll-Bewegung (M*) angenähert wird.

Gemäß einer weiteren Ausbildung ist eine Kraftregelung für die Bewegung des Objekts (100) derart ausgebildet, dass
- die Ist-Bewegung (M') hinsichtlich der Richtungsvorgaben (Kinetik) der Soll-Bewegung (M*) nachfolgt, UND
- die Ist-Bewegung (M') in Bezug auf die Kraftvorgaben (Dynamik), die durch die externen Kräfte (F) an dem mindestens einen Bediengerät (2) erfasst werden, angepasst und insbesondere verstärkt ist.

Gemäß einer weiteren Ausbildung ist die Kraftregelung derart ausgebildet, dass die an dem Bediengerät (2) für einen Benutzer haptisch wahrnehmbaren Ist-Reaktionskräfte während einer Bewegung des Objekts (100) im Vergleich zu den hypothetischen Reaktionskräften, die für die Bewegung des Objekts ohne einen unterstützenden geregelten Antrieb auftreten würden, in den Richtungsbezügen übereinstimmen und in der Höhe vermindert sind, sodass die Ist-Reaktionskräfte ein proportionales Abbild der hypothetischen Reaktionskräfte sind und sich der Bewegungsvorgang insbesondere für den Benutzer anfühlt, als sei die Masse und/oder Trägheit des Objekts reduziert.

Gemäß einer weiteren Ausbildung weist die Antriebsvorrichtung eine Umfelderfassung auf, die insbesondere Bewegungseinschränkungen durch Hindernisse oder Sperrbereiche im Umfeld des Objekts (100) und/oder der mindestens einen Bewegungseinrichtung (200) erfasst, wobei die Umfelderfassung insbesondere einen oder mehrere Abstandssensoren und/oder einen oder mehrere Bildgebende Umgebungssensoren aufweist und/oder Informationen über Bewegungseinschränkungen von einem externen Überwachungssystem empfängt.

Gemäß einer weiteren Ausbildung sieht die Bewegungs-Regelung und insbesondere die Kraftregelung zwei oder mehr der folgenden Autonomielevel vor:
- Level 01: Unbeschränkte Kraft- oder Momenten-Verstärkung durch Impedanz-Regelung und/oder Admittanz-Regelung;
- Level 02: Kraft- oder Momenten-Verstärkung mit Einschränkung der steuerbaren Freiheitsgrade der Bewegung, insbesondere Festlegung einer Bewegung durch reine Translation in einer oder zwei Richtungen und/oder Festlegung einer Bewegung durch reine Rotation und/oder Festlegung einer Bewegung mit einem definierten Zentrum für die Rotation oder einen Rotationsanteil der Bewegung;
- Level 03: Kraft- oder Momenten-Verstärkung mit einer Zonenvermeidungsregelung, die eine zu starke Annäherung an oder das Einfahren in solche Umgebungszonen vermeidet, in denen eine Bewegungseinschränkung erfasst wurde;
- Level 04: Zumindest zeitweise Trajektoriensteuerung, wobei die Regelung der Ist-Bewegung nach einer vorgegebenen oder von der Antriebsvorrichtung autonom festgelegten Trajektorie erfolgt und der Benutzer nur die Geschwindigkeit oder das quantitative Ausmaß der Bewegung vorgibt;
- Level 05: Zumindest zeitweise vollständig autonome Bewegungsregelung für mindestens eine Bewegungseinrichtung und/oder das zu bewegende Objekt (100) .

### BEZUGSZEICHENLISTE

- 1: Haptisches Bediengerät
- 2: Griffteil
- 3: erster Greifbereich
- 4: zweiter Greifbereich
- 5: erster Griffteil-Sensorabschnitt
- 6: zweiter Griffteil-Sensorabschnitt
- 7: erstes Lagerelement
- 8: zweites Lagerelement
- 9: Halterung
- 10: erster Halteabschnitt
- 11: zweiter Halteabschnitt
- 12: Referenzkontur
- 13: erster Lager-Sensorabschnitt
- 14: zweiter Lager-Sensorabschnitt
- 15: erster Auslenkungssensor
- 16: zweiter Auslenkungssensor
- 17: erstes Mess-Objekt
- 18: zweites Mess-Objekt
- 19: Kommando-Steuerung
- 20: Kommunikationseinrichtung / Kommunikationseinrichtung für drahtlose Kommunikation
- 21: Befestigungs-Schnittstelle
- 22: Raumlagesensor
- 23: Energieversorgung / Batterie
- 24: Schnittstellengerät
- 25: Greif-Erfassungsmittel
- 100: Fahrbares Objekt
- 101: Container / Frachtcontainer
- 102: Karren / Portalkarren
- 103: Bett / Krankenhausbett
- 200: Bewegungseinrichtung / Kollaborative Roboterplattform
- 201: Omnidirektionale Antriebseinheit
- 202: Bewegungs-Regeleinrichtung
- 203: Kollaborative Roboterplattform
- 204: Global-Steuereinrichtung
- 205: Regional-Steuereinrichtung
- 300: Antriebsvorrichtung
- dP: Auslenkung
- dU: Auslenkung in Längsrichtung
- dV: Auslenkung in (der ersten) Querrichtung
- dW: Auslenkung in (der zweiten) Querrichtung
- B: Benutzer
- F: externe Kraft / externe Kräfte
- K: Gesamtsteifigkeit / Gesamt-Resilienz
- K1,K2,K3: Partielle Steifigkeit / Resilienz, richtungsbezogene Steifigkeit / Resilienz
- L: Länge / Abstand Messpunkt zu Referenzpunkt
- M*: Soll-Bewegung des Objekts
- M': Ist-Bewegung des Objekts
- P: Position des Griffteils (momentan)
- P*: Referenz-Position
- P': ausgelenkte Position
- SM: Bewegungs-Steuersignal für Soll-Bewegung
- U: Längsrichtung des Griffteils
- V: Erste Querrichtung des Griffteils
- W: Zweite Querrichtung des Griffteils
- X: erste horizontale Richtung
- Y: zweite horizontale Richtung
- Z: Senkrechte Achse / Gravitationsrichtung

## Patentansprüche

1. Bediengerät zur Erzeugung eines Bewegungs-Steuersignals (SM) für ein in der Ebene omnidirektional fahrbares Objekt (100), das mit einer und bevorzugt mehreren omnidirektionalen Antriebseinheiten (201) zeitweise oder dauerhaft verbunden ist, wobei das Bediengerät (1) umfasst:
- ein Griffteil (2);
- Zwei Griffteil-Sensorabschnitte (5, 6);
- Zwei nachgiebige Lagerelemente (7, 8), wobei an oder in den Lagerelementen (7, 8) Lager-Sensorabschnitte (13, 14) angeordnet sind, wobei ein erster Lager-Sensorabschnitt (13) mit dem ersten Griffteil-Sensorabschnitt (5) korrespondiert und ein zweiter Lager-Sensorabschnitt (14) mit dem zweiten Griffteil-Sensorabschnitt (6) korrespondiert; und wobei
- das Griffteil (2) durch die Lagerelemente (7, 8) derart gegenüber einer Halterung (10) festlegbar ist, dass die zwei Lagerelemente (7, 8) das Griffteil (2) in eine Referenzposition (P*) drängen und bei Aufbringung externer Kräfte (F) am Griffteil (2) eine Auslenkung (dP) des Griffteils (2) gegenüber der Referenzposition (P*) zulassen; wobei
- an jedem Paar von korrespondierenden Sensorabschnitten (5, 6, 13, 14) ein Auslenkungssensor (15, 16) derart angeordnet ist, dass durch den Auslenkungssensor (15, 16) die Auslenkung (dP) des Griffteils (2) erfassbar ist;
**dadurch gekennzeichnet, dass**
- die Auslenkung (dP) des Griffteils (2) an den zwei Lagerelementen (7, 8) separat erfasst wird; und wobei
- jedes der zwei Lagerelemente (7, 8) eine lokale Auslenkung (dU, dV, dW) des Griffteils (2) in mehreren Freiheitsgraden zulässt und eine bekannte mehrachsige Steifigkeit (K, K1, K2, K3) aufweist, und wobei die Auslenkungssensoren (15, 16) jeweils eine mehrachsige lokale Auslenkung (dU, dW) erfassen; und wobei
- das Bediengerät eine Kommando-Steuerung (15) aufweist, die mit den Auslenkungssensoren (15, 16) verbunden ist.

2. Bediengerät nach Anspruch 1, wobei das Griffteil (2) zwei Greifbereiche (3, 4) umfasst, wobei das Griffteil (2) von einem Benutzer mit einer ersten Hand an dem ersten Greifbereich (3) und mit einer zweiten Hand an dem zweiten Greifbereich (4) greifbar ist.

3. Bediengerät nach Anspruch 1 oder 2, wobei der erste Griffteil-Sensorabschnitt (5) an oder neben dem ersten Greifbereich (3) angeordnet ist und der zweite Griffteil-Sensorabschnitt (6) an oder neben dem zweiten Greifbereich (4) angeordnet ist.

4. Bediengerät nach einem der vorhergehenden Ansprüche, wobei die Kommando-Steuerung (15) aus der erfassten lokalen Auslenkung (dP) an den zwei Lagerelementen (7, 8) ein Bewegungs-Steuersignal (SM) für die omnidirektionale Soll-Bewegung (M*) des fahrbaren Objektes berechnet.

5. Bediengerät nach einem der vorhergehenden Ansprüche, wobei das Bewegungs-Steuersignal (SM) für die omnidirektionale Soll-Bewegung (M*) des fahrbaren Objektes (100) eine Rotationsbewegung um eine senkrechte Achse (Z) und eine Translationsbewegung in jeder beliebigen Richtung in der Horizontalebene umfasst.

6. Bediengerät nach einem der vorhergehenden Ansprüche, wobei die Kommando-Steuerung (19) dazu ausgebildet ist, eine Raumlage des Griffteils (2) in Bezug auf eine externe Referenzrichtung zu erfassen und die Auslenkung (dP) des Griffteils (2), die in Bezug auf die Richtungsbezüge (U, V, W) des Bedienteils (2) erfasst ist, derart in das Bewegungs-Steuersignal (SM) umzusetzen, dass die Soll-Bewegung (M*) in Bezug auf die externe Referenzrichtung angegeben ist, wobei die externe Referenzrichtung insbesondere die Gravitationsrichtung (Z) ist.

7. Bediengerät nach einem der vorhergehenden Ansprüche, wobei das Bediengerät einen Raumlagesensor (22) umfasst, der dazu ausgebildet ist, die Raumlage des Griffteils (2) gegenüber einer externen Referenzrichtung zu ermitteln, wobei die externe Referenzrichtung insbesondere die Gravitationsrichtung (Z) ist.

8. Antriebsvorrichtung zur Bereitstellung eines gesteuerten Fahrantriebs für ein Objekt (100), wobei die Antriebsvorrichtung (300) umfasst:
- mindestens ein Bediengerät (1) nach einem der vorhergehenden Ansprüche, und
- mindestens eine Bewegungseinrichtung (200).

9. Antriebsvorrichtung nach dem vorhergehenden Anspruch, wobei die Bewegungseinrichtung (200) mindestens eine und bevorzugt mehrere omnidirektionale Antriebseinheiten (201) umfasst, die gemeinsam über eine Bewegungs-Regeleinrichtung (202) gesteuert werden.

10. Antriebsvorrichtung nach einem der vorhergehenden Ansprüche, wobei die Bewegungs-Regeleinrichtung (202) gemäß einer der nachfolgenden Implementierungsarten gebildet ist, wobei
- bei einer Separaten Implementierung: die Bewegungs-Regeleinrichtung (202) durch eine separate Global-Steuereinrichtung gebildet ist; ODER
- bei einer Verteilten Implementierung: die Bewegungs-Regeleinrichtung (202) durch eine Regional-Steuereinrichtung an einer ersten Bewegungseinrichtung (200) gebildet ist und mit mindestens einer weiteren Regional-Steuereinrichtung an einer zweiten Bewegungseinrichtung (200) kommuniziert, insbesondere im Rahmen einer Master-Slave Kommunikation; ODER
- bei einer in das Bediengerät integrierten Implementierung: die Bewegungs-Regeleinrichtung (202) in die Kommando-Steuerung (19) des mindestens einen Bediengeräts (2) integriert ist und die Bewegungs-Regeleinrichtung (202) insbesondere mit mindestens einer Regional-Steuereinrichtung an einer Bewegungseinrichtung (200) kommuniziert.

11. Antriebsvorrichtung nach dem vorhergehenden Anspruch, wobei die Bewegungs-Regeleinrichtung (202) zeitweise oder wechselweise durch die Separate Implementierung, die Verteilte Implementierung und/oder die im Bediengerät integrierte Implementierung gebildet ist.

12. Antriebsvorrichtung nach einem der vorhergehenden Ansprüche, wobei die Antriebsvorrichtung (200), insbesondere die Bewegungs-Regeleinrichtung (202), eine Kraftregelung für die Bewegung des Objekts (100) vorsieht, insbesondere eine Impedanz-Regelung und/oder eine Admittanz-Regelung.

13. Antriebsvorrichtung nach einem der vorhergehenden Ansprüche, wobei die Antriebsvorrichtung zwei oder mehr Bediengeräte (2) umfasst, die an demselben Objekt (100) anordenbar oder angeordnet sind, und wobei die Bewegungs-Steuersignale (SM) der mehreren Bediengeräte (2) in der Regelung der Ist-Bewegung (M') des Objekts gemeinsam berücksichtigt werden, insbesondere durch Superposition.

14. Antriebsvorrichtung nach einem der vorhergehenden Ansprüche, wobei die Bewegungseinrichtung (200) mindestens eine kollaborative Roboterplattform (203) umfasst.

15. Antriebsvorrichtung nach einem der vorhergehenden Ansprüche, wobei die Antriebsvorrichtung (300) mindestens zwei kollaborative Roboterplattformen (203) aufweist, die dazu ausgebildet sind, zumindest zeitweise mit dem zu bewegenden Objekt (100, 101, 102, 103) mechanisch gekoppelt zu werden, und wobei die Bewegungs-Regelung der mehreren Roboterplattformen derart synchronisiert ist, dass sie gemeinsam mit dem Objekt (100, 101, 102, 103) eine Gesamt-Bewegung ausführen, die mit der Soll-Bewegung (M*) für das Objekt korrespondiert, wobei insbesondere die Partialbewegungen der Roboterplattformen (203) gemäß der Momentanpol-Lehre aus der Soll-Bewegung (M*) für das Objekt ermittelt werden.
